# EUROPEAN PATENT SPECIFICATION

(11) **EP 1 221 470 B1**
(45) Date of publication and mention of the grant of the patent: **09.03.2005**
(21) Application number: 01304961.4
(22) Date of filing: 06.06.2001
(51) Int. Cl.: C09J 7/00, C09J 5/00, C09J 11/00, B65B 3/04

(54) **Glass particles as detackifying agent in adhesive/sealant material and process for packaging the same**
Glasteilchen als Klebverminderer in Kleb- oder Füllmaterialien und Verfahren zum Verpacken dieser Materialien
Particules de verre utilisables commes agents détaquifiants dans un matériau adhésif et procédé de conditionnement de ce matériau

(30) Priority: 03.01.2001 US 753647
(43) Date of publication of application: 10.07.2002
(73) Proprietor: Exchem Plc, Alfreton, Derbyshire DE55 7RE (GB)
(72) Inventor: Flint, Theodore R., Elversson, PA 19520 (US); Ewings, Paul, Ripley, Derbyshire DE5 3JP (GB)
(74) Representative: Gordon, Naoise Padhraic Edward

(56) References cited:
- EP-A- 0 429 269
- US-A- 4 054 697
- US-A- 4 376 151
- US-A- 4 556 595

## Description

### Field of Invention

The present invention generally relates to adhesives and sealants provided in the form of a block or an extruded stick, and more particularly to devices for reducing the tackiness of the surface of those block or extruded sticks.

### Background Of the Invention

Consumers and craftsman have become familiar with a type of adhesive/sealant provided in the form of an extruded stick with a concentric curing agent component formed on the inside. It is known to package such extruded sticks as hand moldable epoxy putty sticks, with a release film or shrink wrap that is easily handled and does not stick to the container or the user of the stick. The user merely peels the release film or shrink wrap from the surface of the moldable epoxy putty stick to be ready for use. This action reveals the "tacky" surface of the epoxy stick for application to an intended surface, but which can also adhere to unintended surfaces as well during handling. The adherence of this tacky surface to portions of the machinery used to package such sticks, e.g., shrink wrapping machinery, is a particularly significant problem in the art. The shrink wrap and releasable film must also be discarded causing environmental concerns.

US Patent Specification Number 4,376,151 discloses an adhesive product for business forms in which a layer of pressure sensitive adhesive having a coating of micro-spheres is applied to a paper substrate. US Patent Specification Number 4,556,595 describes a pressure-sensitive adhesive sheet comprising a pressure-sensitive adhesive layer and non-adhesive solid particles. European Patent Specification Number 429,269A describes a pressure-sensitive adhesive tape having a surface of pressure-sensitive adhesive with clumps of glass beads. US Patent Specification Number 4,054,697 describes a decorative sheet material such as a wall covering with a pressure-sensitive adhesive surface and a superimposed microsphere layer.

### Summary Of The Invention

According to the invention there is provided a kneadable epoxy putty having an inner core of activating agent surrounded by a layer of adhesive sealant and an outer surface comprising a coating of substantially regularly shaped particles so as to reversibly detackify the outer surface.

Preferably, the coating completely covers said outer surface. Alternatively, the coating covers less than the theoretical amount which would be necessary to completely cover said outer surface. Suitably, the coating covers said outer surface by an amount which is more than about 90% of the total surface area of said kneadable epoxy putty.

Advantageously, the coating covers between 90% to 99.9% of said outer surface and preferably the coating covers between 95% to 99.9% of said outer surface.

In one embodiment of the invention, the coating of substantially regularly shaped particles comprises an average particle size in the range of from about 0.2mm to 0.6mm. Preferably, the coating of substantially regularly shaped particles comprises an average particle size in the range of from about 0.6mm to 0.8mm. Alternatively, the coating of substantially regularly shaped particles comprises an average particle size in a range of from about 0.8mm to 1.8mm.

Suitably, the coating of substantially regularly shaped particles comprises glass microballoons.

Alternatively, the coating of substantially regularly shaped particles comprises glass beads.

Suitably, the glass microballoons have diameters in the range of 0.2mm to 0.6mm. Advantageously, the glass beads have diameters in the range of 0.2mm to 0.6mm.

Preferably, the coating of substantially regularly shaped particles are substantially spherical.

In one embodiment of the invention, the coating of substantially regularly shaped particles comprises organic particulate material. Suitably, the substantially regularly shaped particles are colourless. Advantageously, the substantially regularly shaped particles are substantially clear.

A process for the packaging of an adhesive/sealant compound is also provided comprising applying a coating of substantially regularly shaped particles to an outer surface of an adhesive/sealant compound so as to reversibly detackify the outer surface.

The coated adhesive/sealant compound is then operated upon by a shrink wrapping machine so as to package the adhesive/sealant compound by wrapping the adhesive/sealant compound in a shrinking plastics material wherein said shrinking plastics material when applied by the shrink wrapping machine shrinks uniformly over and around said adhesive sealant compound.

Accordingly, a material has been sought to provide a very thin, non-tacky coating to the moldable epoxy putty stick which would not become an unsightly, lumpy material in the mixed product. The coating needs to stay on and not be removed, and also become an integral, chemically compatible part of the cured epoxy adhesive/sealant. Importantly, the coating should not be detrimental to the strength or other properties of the mixed and cured epoxy adhesive/sealant.

### Brief Description Of The Drawings

These and other features and advantages of the present invention will now be described having regard to the accompanying drawings wherein like numbers refer to like parts in which:

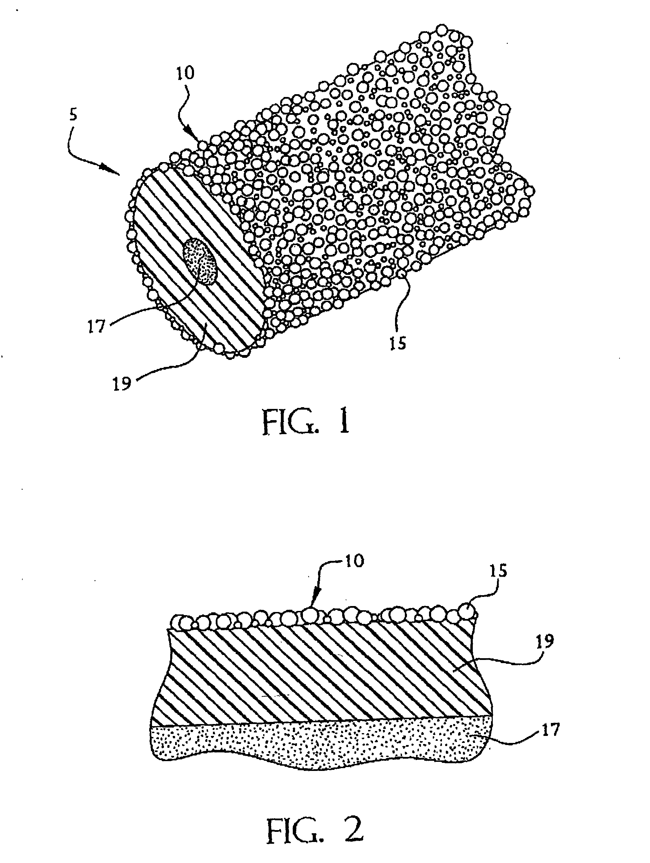

Fig. 1 is a perspective view of a portion of an extruded adhesive/sealant stick having a reversibly detackified surface according to the invention;
Fig. 2 is a partial cross-sectional view of the adhesive/sealant stick shown in Fig. 1; and

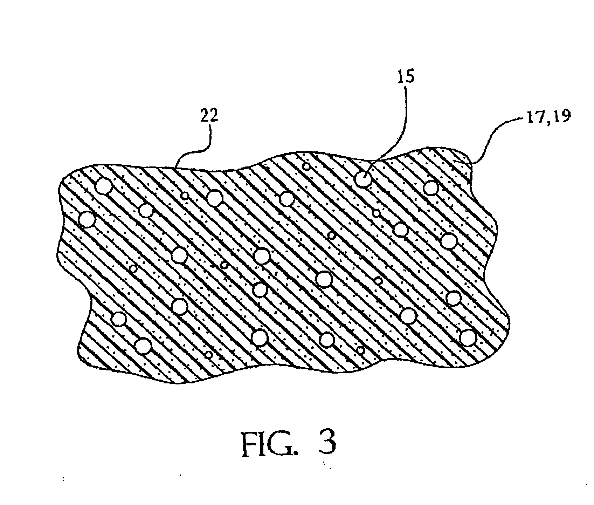

Fig. 3 is a cross-sectional view of the adhesive/sealant stick shown in Fig. 1, after it has been kneaded and/or molded prior to application to a surface.

### Detailed Description

As shown in the drawings, an embodiment of the present invention is directed to an extruded stick 5 of hand moldable adhesive/sealant, e.g., epoxy putty, having a reversibly detackified surface 10 comprising a coating of particles 15. The adhesive/sealant stick that is used in one embodiment of the invention comprises an inner core of activating or curing agent 17 surrounded by a layer of adhesive/sealant material 19. Unlike the prior art, which has employed a covering of release film, shrink wrap, paper, or finely divided powders, e.g., talc or the like, the surface of adhesive/sealant material 19 is protected by a layer of non-tacky regularly shaped particulate material 15 which reversibly detackifies the adhesive surface.

As used in this disclosure, the terminology "reversibly detackify, reversible detackification, or reversibly detackified" refers to a quality, characteristic, or process associated with a substance that normally comprises adhesive, tacky, or sticky surface properties by which those adhesive, tacky, or sticky surface properties are not evident upon the application of light pressure such that the substance does not adhere or, only weakly adheres, to the source of that light pressure, but which substance is capable of adhering to a source of moderate pressure. The terminology "moderate pressure" refers to an amount of pressure which is sufficient to displace or submerge a coating of particles 15 into adhesive/sealant material stick 5 so that coating of particles 15 is subsumed within the bulk of the adhesive/sealant material. For example, moderate pressure is applied to adhesive/sealant material stick 5 during kneading, molding and/or forming of the material into a useful form.

According to one embodiment of the present invention, once an adhesive/sealant material has been extruded into an easily usable form, e.g., a stick or block 5, it is coated with non-tacky regularly shaped particles 15. The amount of non-tacky regularly shaped particles 15 adhered to the surface of adhesive/sealant material 19 should be sufficient to detackify the surface. This amount may be equal to the theoretical amount required to completely cover the entire surface area of adhesive/sealant material stick 5 or, may be significantly less than this amount depending on the size of the particles used and the degree of detackification desired.

In one embodiment, the amount of particles 15 is less than the theoretical amount which would be necessary to completely cover the surface area of adhesive/sealant material stick 5, and is preferably an amount which is more than about 90% of the total surface area of adhesive/sealant material stick 5. Thus layer of non-tacky particles 15 applied to the surface of adhesive/sealant stick 5 is in an amount effective to inhibit the surface of adhesive/sealant stick 5 from adhering to a surface upon the application of light pressure to the adhesive. Suitable amounts of non-tacky particles 15 which may be applied to the surface of adhesive/sealant stick 5 can range from 90 to 99.9% of the surface area, and is preferably in the range of from 95 to 99.9% of surface area.

The particles can be applied by a powder coating process, can be simply sprayed or rolled onto the surface of adhesive/sealant material stick 5 on a moving web, or can be applied by other known methods of applying particles to surfaces. It is considered an important feature of the present invention that the reversibly detackified surface of extruded hand moldable adhesive/sealant material stick 5 provide a relatively non-stick or non-adhesive quality to adhesive/sealant material stick 5 during normal handling, and prior to activation of the epoxy by kneading or squeezing under moderate pressure sufficient to thoroughly mix activating or curing agent 17 with adhesive/sealant material 19.

Suitable non-tacky regularly shaped particles 15 for use in the present invention include any non-tacky regularly shaped particulate matter which sufficiently detackifies the surface of adhesive/sealant material stick 5 to prevent permanent adherence to a surface, but which does not deleteriously affect the bond strength between that surface and the surface to which it is intended to be applied. In general, such suitable non-tacky regularly shaped particulate matter has an average particle size in a range of from about 0.6 to 0.8 millimeters (mm) but may be as large as 1.8mm in another form of the invention.

For example, glass microballoons or solid glass beads having diameters in the range of 0.2 millimeters to 0.6 millimeters have been coated onto adhesive/sealant material sticks and resulted in a non-tacky surface that is essentially permanent, i.e., stable in the presence of light pressure. Spheres of this diameter have been able to inhibit the creep of the viscous liquid resin of adhesive/sealant material 19 for substantially long periods of time, suitable for long term storage.

Spheres or beads in the 0.6 millimeter to 0.8 millimeter diameter range also achieved the same effect. Spheres or beads in the range of 0.8 millimeters but less than 1.8 millimeters result in a non-tacky surface but become obvious in the mixed product as discreet particles and may be undesirable to the user. Glass spheres or glass beads that are clear or colourless i.e., impart little or no coloration to the surface of adhesive/sealant material stick 5, have been found to be particularly preferred when used in connection with shrink wrapping. However, for certain purposes such diameter beads or even larger may be acceptable even if used to indicate degree or mixing. The non-tacky particles 15 may also comprise organic, inorganic or a mixture of organic and inorganic particles. It is considered important if that non-tacky organic particulate material 15 is used to coat the surface of extruded hand moldable adhesive/sealant stick 5, it not be soluble in adhesive/sealant 19.

Significantly, coating epoxy putty sticks with spherical or uniformly shaped particles 15 allows the sticks of epoxy putty to be fed easily into and through a conventional packaging machine (e.g., a shrink wrapping machine) without sticking or causing damage to the machine or, destroying the epoxy putty sticks themselves due to engagement to the machine's parts. Advantageously, coating adhesive/sealant material stick 5 with substantially dry particles, without substantially changing the colour of the stick, allows shrink-wrapping to be performed far more effectively than is known in the art. If adhesive/sealant material stick 5 is coated so as to be fully compatible with conventional shrink wrapping machinery, smaller beads are preferred, e.g./ glass beads having a diameter of less than about 0.2 millimeters. This size of bead does not create a long lasting non-tacky surface on adhesive/sealant material stick 5, but once shrink-wrapped, it is not important if the tacky surface returns.

It will be understood that shrink-wrappable materials are well known, and available on the commercial market. A shrink-wrappable material generally comprises an oriented thermoplastic sheeting which, when heated, shrinks in the oriented direction adhering to itself and the wrapped product in the process. When used in connection with the present invention, the shrinking polymer shrinks more uniformly over and around adhesive/sealant material stick 5, without wrinkles, because the shrink wrap plastic slides over particles 15, as it shrinks. Any commonly used shrink-wrappable thermoplastic may be used in connection with the present invention, e.g., polyvinylchloride, polyvinylacetate, polyolefins, and the like. Conventional shrink wrapping machines, such as any of the ones that are taught in U.S. Patents Nos.: 5,956,931; 5,941,052; 5,619,843; 5,371,999; and 4,341,057, or the like, may be used to package adhesive/sealant material stick 5 in accordance with the process of the present invention with good results.

## Claims

1. A kneadable epoxy putty having an inner core of activating agent (17) surrounded by a layer of adhesive/sealant (19) and an outer surface (10) coated with a layer of substantially regularly shaped particles (15) so as to reversibly detackify said outer surface (10).

2. A kneadable epoxy putty according to Claim 1 wherein said coating completely covers said outer surface (10).

3. A kneadable epoxy putty according to Claim 1 wherein said coating covers less than the theoretical amount which would be necessary to completely cover said outer surface (10).

4. A kneadable epoxy putty according to Claim 1 wherein said coating covers said outer surface (10) by an amount which is more than about 90% of the total surface area of said kneadable epoxy putty.

5. A kneadable epoxy putty according to any of Claims 3 to 4 wherein said coating covers between 90% to 99.9% of said outer surface (10).

6. A kneadable epoxy putty according to any of Claims 3 to 5 wherein said coating covers between 95% to 99.9% of said outer surface (10).

7. A kneadable epoxy putty according to any of Claims 1 to 6 wherein said coating of substantially regularly shaped particles (15) comprises an average particle size in a range of from about 0.2 millimeters to 0.6 millimeters.

8. A kneadable epoxy putty according to any of Claims 1 to 6 wherein said coating of substantially regularly shaped particles (15) comprises an average particle size in a range of from about 0.6 to 0.8 millimeters.

9. A kneadable epoxy putty according to any of Claims 1 to 6 wherein said coating of substantially regularly shaped particles (15) comprises an average particle size in a range of from about 0.8 millimeters to 1.8 millimeters.

10. A kneadable epoxy putty according to any of Claims 1 to 9 wherein said coating of substantially regularly shaped particles (15) comprise glass microballoons.

11. A kneadable epoxy putty according to any of Claims 1 to 9 wherein said coating of substantially regularly shaped particles (15) comprise glass beads.

12. A kneadable epoxy putty according to Claim 10 wherein said coating of substantially regularly shaped particles (15) comprise glass microballoons having diameters in the range of 0.2 millimeters to 0.6 millimeters.

13. A kneadable epoxy putty according to Claim 11 wherein said coating of substantially regularly shaped particles (15) comprise glass beads having diameters in the range of 0.2 millimeters to 0.6 millimeters.

14. A kneadable epoxy putty according to any of Claims 1 to 9 wherein said coating of substantially regularly shaped particles (15) are substantially spherical.

15. A kneadable epoxy putty according to any of Claims 1 to 9 wherein said coating of substantially regularly shaped particles (15) comprise organic particulate material.

16. A kneadable epoxy putty according to any of Claims 1 to 15 wherein said substantially regularly shaped particles are colourless.

17. A kneadable epoxy putty according to any of Claims 1 to 16 wherein said substantially regularly shaped particles are substantially clear.

18. A process for packaging an adhesive/sealant compound comprising;
(A) applying a coating of substantially regularly shaped particles (15) to an outer surface (10) of an adhesive/sealant compound so as to reversibly detackify said outer surface (10); and
(B) operating a shrink wrapping machine so as to package said adhesive/sealant compound by wrapping said adhesive/sealant compound in a shrinking plastics material wherein said shrinking plastics material when applied by the shrink wrapping machine shrinks uniformly over and around said adhesive/sealant compound.

19. A process for packaging an adhesive/sealant compound according to Claim 18 wherein the substantially regularly shaped particles (15) are glass beads and the shrinking plastics material is a heat shrinkable polymer which when heated shrinks uniformly over and around said adhesive/sealant compound without adhering to said coated outer surface (10).

## Patentansprüche

1. Ein knetbarer Epoxydkitt mit einem inneren Kern aus Aktivierungsmitteln (17), der von einer Schicht aus Klebstoff/Dichtmittel (19) umgeben ist, und einer äußeren Oberfläche (10), die mit einer Schicht von im Wesentlichen regelmäßig geformten Partikeln (15) überzogen ist, um die äußere Oberfläche (10) umkehrbar weniger klebbar zu machen, aufweist.

2. Knetbarer Epoxydkitt gemäß Anspruch 1, wobei der Überzug die äußere Oberfläche (10) vollständig bedeckt.

3. Knetbarer Epoxydkitt gemäß Anspruch 1, wobei der Überzug. weniger als die theoretische Menge bedeckt, die notwendig wäre, um die äußere Oberfläche (10) vollständig zu bedecken.

4. Knetbarer Epoxydkitt gemäß Anspruch 1, wobei der Überzug die äußere Oberfläche (10) durch eine Menge abdeckt, die mehr als ungefähr 90 % des gesamten Oberflächenbereichs des knetbaren Epoxydkitt beträgt.

5. Knetbarer Epoxydkitt gemäß einem der Ansprüche 3 bis 4, wobei der Überzug zwischen 90 % und 99,9 % der äußeren Oberfläche (10) bedeckt.

6. Knetbarer Epoxydkitt gemäß einem der Ansprüche 3 bis 5, wobei der Überzug zwischen 95 % und 99,9 % der äußeren Oberfläche (10) bedeckt.

7. Knetbarer Epoxydkitt gemäß einem der Ansprüche 1 bis 6, wobei der Überzug von im Wesentlichen regelmäßig geformten Partikeln (15) eine durchschnittliche Partikelgröße in einem Bereich von ungefähr 0,2 Millimeter bis 0,6 Millimeter beinhaltet.

8. Knetbarer Epoxydkitt gemäß einem der Ansprüche 1 bis 6, wobei der Überzug von im Wesentlichen regelmäßig geformten Partikeln (15) eine durchschnittliche Partikelgröße in einem Bereich von ungefähr 0,6 Millimeter bis 0,8 Millimeter beinhaltet.

9. Knetbarer Epoxydkitt gemäß einem der Ansprüche 1 bis 6, wobei der Überzug von im Wesentlichen regelmäßig geformten Partikeln (15) eine durchschnittliche Partikelgröße in einem Bereich von ungefähr 0,8 Millimeter bis 1,8 Millimeter beinhaltet.

10. Knetbarer Epoxydkitt gemäß einem der Ansprüche 1 bis 9, wobei der Überzug von im Wesentlichen regelmäßig geformten Partikeln (15) Glasmikroballons beinhaltet.

11. Knetbarer Epoxydkitt gemäß einem der Ansprüche 1 bis 9, wobei der Überzug von im Wesentlichen regelmäßig geformten Partikeln (15) Glasperlen beinhaltet.

12. Knetbarer Epoxydkitt gemäß Anspruch 10, wobei der Überzug von im Wesentlichen regelmäßig geformten Partikeln (15) Glasmikroballons beinhaltet, die Durchmesser in dem Bereich von 0,2 Millimeter bis 0,6 Millimeter aufweisen.

13. Knetbarer Epoxydkitt gemäß Anspruch 11, wobei der Überzug von im Wesentlichen regelmäßig geformten Partikeln (15) Glasperlen beinhaltet, die Durchmesser in dem Bereich von 0,2 Millimeter bis 0,6 Millimeter aufweisen.

14. Knetbarer Epoxydkitt gemäß einem der Ansprüche 1 bis 9, wobei der Überzug von im Wesentlichen regelmäßig geformten Partikeln (15) im Wesentlichen kugelförmig ist.

15. Knetbarer Epoxydkitt gemäß einem der Ansprüche 1 bis 9, wobei der Überzug von im Wesentlichen regelmäßig geformten Partikeln (15) organische Schwetstoffe beinhaltet.

16. Knetbarer Epoxydkitt gemäß einem der Ansprüche 1 bis 15, wobei die im Wesentlichen regelmäßig geformten Partikel farblos sind.

17. Knetbarer Epoxydkitt gemäß einem der Ansprüche 1 bis 16, wobei die im Wesentlichen regelmäßig geformten Partikel im Wesentlichen klar sind.

18. Ein Verfahren zum Verpacken einer Klebstoff-/Dichtmittel-Verbindung, das Folgendes beinhaltet:
(A) Auftragen eines Überzugs von im Wesentlichen regelmäßig geformten Partikeln (15) auf eine äußere Oberfläche (10) einer Klebstoff-/Dichtmittel-Verbindung, um die äußere Oberfläche (10) umkehrbar weniger klebbar zu machen; und
(B) Betätigen einer Schrumpfverpackungsvorrichtung, um die Klebstoff-/Dichtmittel-Verbindung durch Umhüllen der Klebstoff-/Dichtmittel-Verbindung in einem Schrumpfplastikmaterial zu verpacken, wobei das Schrumpfplastikmaterial, wenn es von der Schrumpfverpackungsvorrichtung aufgetragen wird, einheitlich über und um die Klebstoff-/Dichtmittelverbindung schrumpft.

19. Verfahren zum Verpacken einer Klebstoff-/Dichtmittel-Verbindung gemäß Anspruch 18, wobei die im Wesentlichen regelmäßig geformten Partikel (15) Glasperlen sind und das Schrumpfplastikmaterial ein wärmeschrumpfendes Polymer ist, das, wenn es erwärmt wird, einheitlich über und um die Klebstoff/Dichtmittel-Verbindung schrumpft, ohne an der überzogenen äußeren Oberfläche (10) anzuhaften.

## Revendications

1. Un mastic époxy pétrissable ayant un noyau interne d'agent activant (17) entouré d'une couche d'adhésif/de matériau d'étanchéité (19) et une surface externe (10) revêtue d'une couche de particules configurées de façon substantiellement régulière (15) afin de rendre moins adhésive de façon réversible ladite surface externe (10).

2. Un mastic époxy pétrissable selon la revendication 1 dans lequel ledit revêtement recouvre complètement ladite surface externe (10).

3. Un mastic époxy pétrissable selon la revendication 1 dans lequel ledit revêtement recouvre moins que la quantité théorique qui serait nécessaire pour recouvrir complètement ladite surface externe (10).

4. Un mastic époxy pétrissable selon la revendication 1 dans lequel ledit revêtement recouvre ladite surface externe (10) d'une quantité qui est supérieure à environ 90 % de l'aire de surface totale dudit mastic époxy pétrissable.

5. Un mastic époxy pétrissable selon n'importe lesquelles des revendications 3 à 4 dans lequel ledit revêtement recouvre entre 90 % et 99,9 % de ladite surface externe (10).

6. Un mastic époxy pétrissable selon n'importe lesquelles des revendications 3 à 5 dans lequel ledit revêtement recouvre entre 95 % et 99,9 % de ladite surface externe (10).

7. Un mastic époxy pétrissable selon n'importe lesquelles des revendications 1 à 6 dans lequel ledit revêtement de particules configurées de façon substantiellement régulière (15) comporte une taille de particule moyenne comprise dans une gamme allant d'environ 0,2 millimètre à 0,6 millimètre.

8. Un mastic époxy pétrissable selon n'importe lesquelles des revendications 1 à 6 dans lequel ledit revêtement de particules configurées de façon substantiellement régulière (15) comporte une taille de particule moyenne comprise dans une gamme allant d'environ 0,6 millimètre à 0,8 millimètre.

9. Un mastic époxy pétrissable selon n'importe lesquelles des revendications 1 à 6 dans lequel ledit revêtement de particules configurées de façon substantiellement régulière (15) comporte une taille de particule moyenne comprise dans une gamme allant d'environ 0,8 millimètre à 1,8 millimètre.

10. Un mastic époxy pétrissable selon n'importe lesquelles des revendications 1 à 9 dans lequel ledit revêtement de particules configurées de façon substantiellement régulière (15) comporte des microballons de verre.

11. Un mastic époxy pétrissable selon n'importe lesquelles des revendications 1 à 9 dans lequel ledit revêtement de particules configurées de façon substantiellement régulière (15) comporte des billes de verre.

12. Un mastic époxy pétrissable selon la revendication 10 dans lequel ledit revêtement de particules configurées de façon substantiellement régulière (15) comporte des microballons de verre ayant des diamètres compris dans la gamme allant de 0,2 millimètre à 0,6 millimètre.

13. Un mastic époxy pétrissable selon la revendication 11 dans lequel ledit revêtement de particules configurées de façon substantiellement régulière (15) comporte des billes de verre ayant des diamètres compris dans la gamme allant de 0,2 millimètre à 0,6 millimètre.

14. Un mastic époxy pétrissable selon n'importe lesquelles des revendications 1 à 9 dans lequel ledit revêtement de particules configurées de façon substantiellement régulière (15) sont substantiellement sphériques.

15. Un mastic époxy pétrissable selon n'importe lesquelles des revendications 1 à 9 dans lequel ledit revêtement de particules configurées de façon substantiellement régulière (15) comporte un matériau particulaire organique.

16. Un mastic époxy pétrissable selon n'importe lesquelles des revendications 1 à 15 dans lequel lesdites particules configurées de façon substantiellement régulière sont incolores.

17. Un mastic époxy pétrissable selon n'importe lesquelles des revendications 1 à 16 dans lequel lesdites particules configurées de façon substantiellement régulière sont substantiellement transparentes.

18. Un procédé destiné à l'emballage d'un composé adhésif/matériau d'étanchéité comportant ;
(A) l'application d'un revêtement de particules configurées de façon substantiellement régulière (15) à une surface externe (10) d'un composé adhésif/matériau d'étanchéité afin de rendre moins adhésive de façon réversible ladite surface externe (10) ; et
(B) l'actionnement d'une machine d'emballage sous film rétractable afin d'emballer ledit composé adhésif/matériau d'étanchéité en enveloppant ledit composé adhésif/matériau d'étanchéité dans un matériau plastique rétractable dans lequel ledit matériau plastique rétractable, lorsque celui-ci est appliqué par la machine d'emballage sous film rétractable, se rétracte de façon uniforme sur et autour dudit composé adhésif/matériau d'étanchéité.

19. Un procédé destiné à emballer un composé adhésif/matériau d'étanchéité selon la revendication 18 dans lequel les particules configurées de façon substantiellement régulière (15) sont des billes de verre et le matériau plastique rétractable est un polymère thermo-rétractable qui, lorsqu'il est chauffé, se rétracte de façon uniforme sur et autour dudit composé adhésif/matériau d'étanchéité sans adhérer à ladite surface externe revêtue (10).
